# EUROPEAN PATENT APPLICATION

(11) **EP 2 169 897 A1**
(43) Date of publication of application: **31.03.2010**
(21) Application number: 08016905.5
(22) Date of filing: 25.09.2008
(51) Int. Cl.: H04L 29/06, H04L 12/58

(54) **Computer-based method for the prioritization of potential malware sample messages**

(71) Applicant: Avira GmbH, 88069 Tettnang (DE)
(72) Inventor: Auerbach, Oliver, 88069 Tettnang (DE)
(74) Representative: Hübner, Gerd

(57) **Abstract**

A computer-based method for the prioritization of potential malware sample messages received from a sender by a malware evaluating entity via at least two separate communication channels is characterised in that at the malware evaluating entity the overall priority level of a received malware sample message is defmed by the following three priority criteria:
- the communication channel via which the potential malware sample message was received, each communication channel having a defined channel priority value,
- the sender which sent the received potential malware sample message, each sender having a defmed sender priority value and
- the overall number of received potential malware sample messages with an identical message contents, wherein the count priority value of a malware sample message with identical contents depends on said overall number.

## Description

The invention refers to a computer-based method for the prioritization of potential malware sample messages received from a sender by a malware evaluating entity via one of at least two separate communication channels.

As concerns the background of the invention, recently published statistics report about the rapid increase in the volume of new malware. In particular, a report published in AV-test.org in January 2008 states that more than 10,000 different malware files appeared every day in the previous year and the outlook for the current year does not look any better. Malware evaluating entities, like companies developing anti-malware software provide for statistics which evidence the fact that many of the sample messages containing files representing potential malware belong to the same family and do not differ significantly from a functionality point of view. Malware analysts working in such a malware evaluating entity have started to add sophisticated detection for malware families instead of individual variants to their products in order to increase the proactive detection. This makes it harder for "the bad guys" to release new and not yet detected variants of malware, like viruses, trojans, bugs etc. As a result of these generic detection routines, the number of individual samples that need to be analysed is much lower and the side effect is a reduced workload.

However, the addition of generic detection routines does not reduce the number of potential malware sample messages or other malware-relevant support incidents. In fact, the use of malware to steal money and the number of new, inexperienced computer users has lead to an explosion of malware-related customer incidents. Processing large numbers of requests from malware evaluating entities, like malware analysing laboratories in different time zones and countries, is proving to be a significant challenge, especially with customers all around the world, who all expect an answer immediately. This is in addition to the prioritization, deduplication, outbreak detection and handling that must all be taken into consideration.

Starting from the problems discussed above it is an object of the invention to provide a computer-based method for the prioritization of potential malware sample messages received from a sender by a malware evaluating entity via one of at least two separate communication channels.

This object is met with by a computer-based prioritization method defined in the characterising part of claim 1. Accordingly, at the malware evaluating entity an overall priority level of a received malware sample message is defined by the following three priority criteria:
- the communication channel via which the potential malware sample message was received, each communication channel having a defined channel priority value
- the sender which sent the received potential malware sample message, each sender having a defined sender priority value and
- the overall number of received potential malware sample messages with identical message contents, wherein a count priority value of a malware sample message with identical contents depends on said overall number.

By means of this computer-based, fully-automated method the overall priority level is determined, which e.g. can be assigned to one of six different priority levels, which are: "low", "low to medium", "medium", "medium to high", "high" and "highest". Each priority has a threshold value assigned to it. In the case where more and more samples arrive, the priority increases on reaching said threshold values. When a priority "high" is reached, an email notification is sent to various senior researchers in the malware evaluating entity in order to make them aware of the critical situation. If "highest" is reached, an SMS message is sent in addition.

As concerns the sender priority value defined above, for example, big customers, technology partners or trusted sources of the malware evaluating entity can be assigned a higher priority from the start even though the priority given by the sample count is lower.

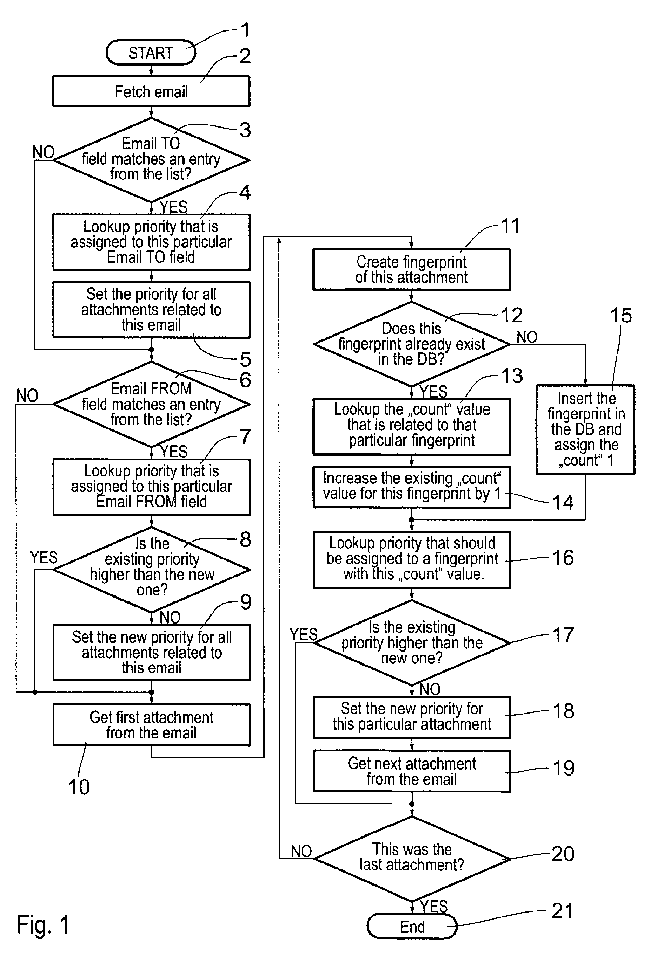

Preferred embodiments of the method according to the invention are defined in the depending claims, the features and advantages of which become clear from the following description of a preferred embodiment referring to the accompanied drawing. This
- Fig. 1: shows a flow chart of the prioritization method applied to an incoming potential malware sample message.

The sample messages for potential malware are receivable via various communication channels of the malware evaluating entity, like different email addresses or via internet on the basis of a website upload form.

Now the prioritization method applied to such incoming messages according to Fig. 1 proceeds from step 1: "Start".

In following step 2 "Fetch email" the incoming potential malware sample message in the form of an email message is put in the following prioritization routine.

Next step 3 is a query "Email to field matches an entry from the list?". With this query, the incoming sample message is checked as to the communication channel via which the potential malware sample message was received, e.g. in case the sample messages are received as email attachments the separate communication channels are represented by different email addresses of the malware evaluating entity.

If the answer in query step 3 is "YES", the process proceeds to step 4 "Look up priority that is assigned to this particular email TO field". In the following step 5 "Set the priority for all attachments related to this email", the process of assigning a channel priority value to the sample messages (i.e. attachments) of this email is finalised.

The following query step 6 "Email FROM field matches an entry from the list?", which is also directly reached from query step 3 in case the answer is "NO", checks the sender which sent the received potential malware sample message which is identified by his email address. The latter is stored in an email address data base.

If the answer of query step 6 is "YES", next step 7 "Look up priority that is assigned to this particular email FROM field" assigns a sender priority value to this message.

The next query step 8 "Is the existing priority higher than the new one?" checks the sender priority value and compares it to the previous priority level. If the answer is "NO", the process continues with step 9 "Set the new priority for all attachments related to this email" where the current sender priority value is defined.

The next step 10 "Get first attachment from the email" is reached from query step 6 in case the answer is "NO" or from query step 8 in case the answer is "YES" or from step 9. The first attachment from the email is now analysed by proceeding to step 11 "Create fingerprint of this attachment". By this step 11, the received potential malware sample message in the attachment is assigned a fingerprint which is representative for the contents of this received malware sample message in the attachment. These finger-prints are stored in a data base (abbreviated "DB").

In the following query step 12 "Does this fingerprint already exist in the DB?" it is checked whether or not the content of the malware sample message is already known to the system or not. If the answer is "YES", the process proceeds to step 13 "Look up the count value that is related to that particular fingerprint", i.e. the count value is fetched and in the following step 14 "Increase the existing count value for this fingerprint by one" the count value is added by one.

In case that in query step 12 the answer is "NO", the process proceeds to step 15 "insert the fingerprint in the DB and assign the count 1", in which the fingerprint is stored in the data base and - as appearing for the first time its count is set to the value 1.

From steps 14 or 15, the process continues with step 16 "Look up priority that should be assigned to a fingerprint with this count value". With this method step the count priority value of the processed attachment with its malware sample message is defined.

In the following query step 17 "Is the existing priority higher than the new one?", it is checked whether the existing priority is up to date or replaced by the count priority value determined in claim 16. If in the query step 17 the answer is "NO", the process continues with step 18 "Set the new priority for this particular attachment", updating the count priority value for this attachment.

Afterwards, by step 19 "Get next attachment from the email", the following potential malware sample message included in the attachment is introduced to the process.

The following query step 20 "This was the last attachment?", which can also be reached from query step 17 if the answer is "YES", checks the end of the attachment list of the incoming email fetched in step 2.

If the answer in query step 20 was "NO", the process loops back to step 11 creating the fingerprint of this next attachment.

If the answer to query step 20 was "YES", process is finalised proceeding to step 21 "End".

The presented prioritization method together with other flanking measures helped to decrease the malware-related workload at the support department of the applicant by more than 11 times.

## Claims

1. Computer-based method for the prioritization of potential malware sample messages received from a sender by a malware evaluating entity via one of at least two separate communication channels,
**characterised in that**
at the malware evaluating entity the overall priority level of a received malware sample message is defined by the following three priority criteria:
- the communication channel via which the potential malware sample message was received, each communication channel having a defined channel priority value,
- the sender which sent the received potential malware sample message, each sender having a defined sender priority value and
- the overall number of received potential malware sample messages with an identical message contents, wherein the count priority value of a malware sample message with identical contents depends on said overall number.

2. Prioritization method according to claim 1, **characterised in that** the potential malware sample messages are received as attachment files.

3. Prioritization method according to claim 1, **characterised in that** the separate communication channels are defined as different email addresses or as website upload forms of the malware evaluating entity.

4. Prioritization method according to claim 1, **characterised in that** the sender of a potential malware sample message is identified by his email address.

5. Prioritization method according to claim 1, **characterised in that** each received potential malware sample message is assigned a fingerprint representative for this received potential malware sample message, which fingerprint is stored in a fingerprint data base and provided with a count value counting the overall number of fingerprints assigned to a received potential malware sample message with identical contents which count value is representative for the number priority value.

6. Prioritization method according to claim 5, **characterised in that** the fingerprint of each received potential malware sample message is compared to the fingerprints stored in the fingerprint data base and in case the fingerprint already exists the count value is increased by 1.
